# EUROPEAN PATENT APPLICATION

(11) **EP 1 072 797 A1**
(43) Date of publication of application: **31.01.2001**
(21) Application number: 99830496.8
(22) Date of filing: 30.07.1999
(51) Int. Cl.: F04C 19/00, B01D 19/00

(54) **Liquid ring pump with combined heat exchanger and separator**

(71) Applicant: Pompetravaini S.p.A., 20022 Castano Primo (Milano) (IT)
(72) Inventor: Travaini, Carlo, 20022 Castano Primo (Milano) (IT)
(74) Representative: Sutto, Luca, Ing.

(57) **Abstract**

A fluid suction unit comprises a vacuum pump (2) for liquid circulation, a separation tank (7) adapted to separate the liquid phase from the gaseous phase of the liquid sent by the pump and a heat exchanger (14) adapted to cool the liquid phase before admission to the pump (2), and disposed at least partly internally of the separation tank (7).

## Description

The present invention relates to a suction unit for fluids of the type comprising a vacuum pump with liquid circulation, a separation tank having an inlet opening for the fluid sent from the pump and adapted to separate the liquid phase from the gaseous phase of said fluid, and a heat exchanger adapted to cool said liquid phase before the same is admitted to said pump.

It is known that in many applications in the field of plants, in the chemical and pharmaceutical sectors for example, fluid suction units are employed that must be capable of creating the vacuum or high sucking pressures, without operating problems, through suction not only of fluids in the gaseous state with a low humidity content, but also of gaseous fluids mixed with liquids.

These suction units may comprise a vacuum pump with liquid circulation, technically also known as liquid-loop pump, which for correct operation requires a continuous liquid admission, the liquid being generally water. The liquid admitted to the pump is discharged therefrom during the delivery operation together with the sucked fluid, and conveyed to a tank for separation of the liquid phase from the gaseous phase. The separation tank has a vent on top for evacuation of the gaseous phase, whereas the liquid phase to be brought back to the pump is collected at the bottom.

Generally the liquid phase coming out of the separation tank, before being re-admitted to the pump flows through a heat exchanger where it is cooled by an appropriate cooling flow at the required temperature for optimal operation of the suction unit. The above mentioned heat exchanger is usually disposed externally and below the separation tank, being connected to the tank by an interconnecting pipeline.

The known art briefly described above has some limits.

In fact, first of all, the pump, separation tank and heat exchanger constitute separated components which are not integrated into a single block so that, as a whole, the suction unit has an important bulkiness of an irregular and not very compact outer shape and consequently it can be hardly transported and it is not steady.

In addition, a very high amount of liquid is required to be maintained at the inside cf the separation tank in order that the liquid level and consequently the hydrostatic pressure at the pump entry should be appropriate. It is finally to be noted that in the fluid suction units of known type, heat exchangers generally do not offer optimal performance in terms of heat exchange and therefore big overall volumes are required, the flow rates of the cooling fluid and the fluid to be cooled as well as the inlet and outlet temperatures of the last-mentioned fluid being the same.

Under this situation, the technical task underlying the present invention is to devise a fluid suction unit capable of substantially overcoming the mentioned limits.

Within the scope of this technical task it is an important aim of the invention to devise a fluid suction unit having a limited bulkiness and a compact and regular shape, the unit performance being the same as that of other similar units of known type.

Another important aim of the invention is to devise a fluid suction unit facilitating servicing operations of both the heat exchanger and the separation tank provided therein.

A further aim of the invention is to devise a suction unit in which the heat exchanger provides a greater yield in cooling the liquid to be sent to the pump, and therefore either has a more reduced volume in terms of space taken up than the exchangers of the known art, the operating conditions being the same, or enables treatment of greater flow rates of liquid to be cooled, bulkiness being the same.

It is a still further aim of the invention to provide a fluid suction unit enabling reduction in the amount of liquids to be held in the separation tank, for supplying the appropriate hydrostatic pressure to the pump entry.

The technical task mentioned and the aims specified are substantially achieved by a fluid suction unit which is characterized in that said heat exchanger is disposed at least partly within said separation tank.

Description of a preferred embodiment of a fluid suction unit in accordance with the invention is now given, by way of non-limiting example, with the aid of the accompanying drawings, in which:

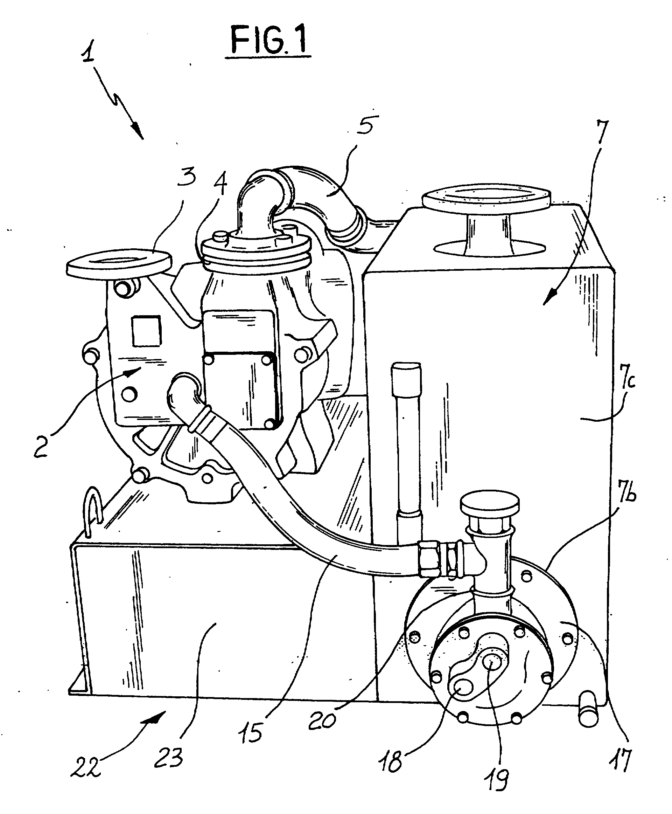

- Fig. 1 is an elevation front view of the fluid suction unit in accordance with the invention;

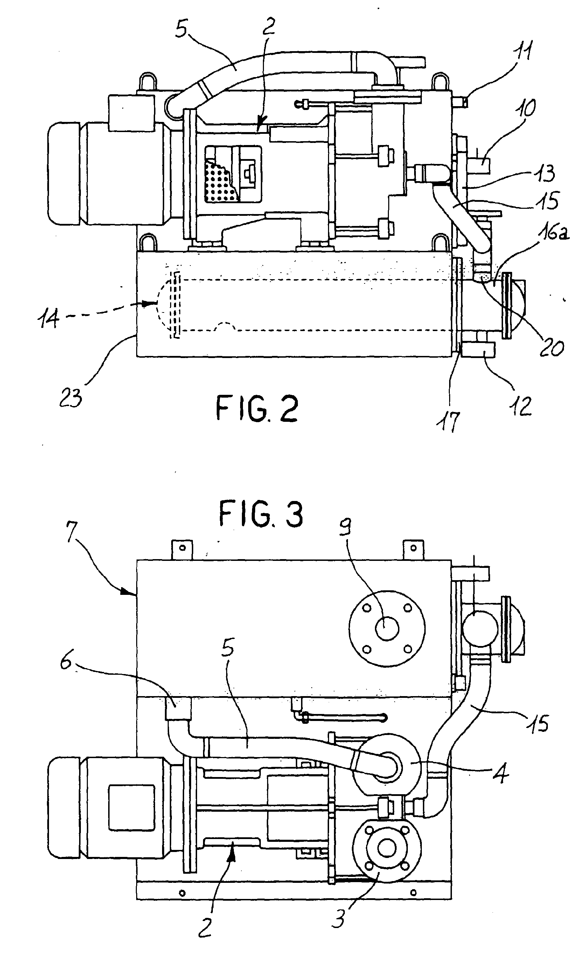

- Fig. 2 is an elevation side view of the unit shown in Fig. 1;
- Fig. 3 is a top view of the unit shown in Fig. 1;
- Fig. 4 is an enlarged side view of the heat exchanger provided in the unit in Fig. 1; and
- Fig. 5 is an elevation side view of the separation tank provided in the unit in accordance with the invention.

With reference to the drawings, the fluid suction unit in accordance with the invention is generally identified by reference numeral 1.

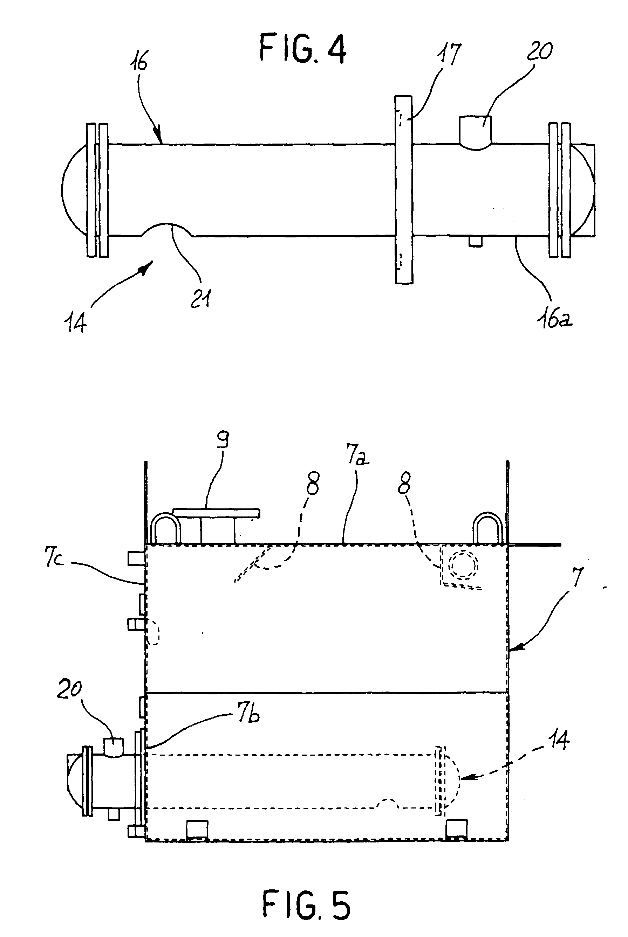

It comprises a vacuum pump 2 with liquid circulation or of the liquid-loop type, as known and conventional. Associated with pump 2 is a first attachment flange 3 for the gas suction duct connected to the use means, and a second attachment flange 4 for the delivery duct 5 connected to an inlet opening 6 of a separation tank 7. Said tank substantially is in the form of a parallelepiped instead of having a cylindrical form typical of the known art, and is adapted to separate the liquid phase of the fluid sent by pump 2, from the gaseous phase. For the purpose, tank 7 internally comprises appropriate partitions 8 formed of sheet metals fastened, by welding for example, to its upper wall 7a against which the fluid strikes causing deposit to the bottom of liquid drops present therein (see Fig. 5).

In addition, tank 7 comprises a vent 9 on top of it, for discharging the gaseous phase to the surrounding atmosphere, an overflow discharge pipe 10 for the liquid, an upper opening 11 for initial admission and possible restoration of the liquid, a draining pipe 12 and a level gauge 13.

The liquid phase contained in the separation tank 7 is cooled in a heat exchanger 14 before its being admitted to pump 2 again, through a conveying duct 15 advantageously made of transparent material to visually check continuous circulation of the liquid.

In an original manner, the heat exchanger 14 is mainly disposed within the separation tank 7 and is dipped into the liquid to be cooled contained therein. It comprises a holding casing 16, within which the liquid phase to be cooled flows, which is advantageously removably connected to tank 7 and insertable thereinto through an access opening 7b disposed at the lower part of a side wall 7c of the tank.

In more detail, the heat exchanger 14 has a flange 17 for attachment to the side wall 7c adapted to sealingly close the access opening 7b. In addition, the holding casing 16 comprises a head 16a externally projecting from the attachment flange 17 and therefore also from the side wall 7c of tank 7. The attachment flange 17 is disposed in close proximity to head 16a so that, practically, the holding casing 16 mainly extends within tank 7. Head 16a is provided with at least two orifices, an inlet orifice and an outlet orifice 18 and 19 for the cooling liquid, as well as of a further outlet 20 for connection to the conveying duct 15.

In order to ensure, even in the case of an anomalous lowering of the liquid level in the tank, appropriate flowing of said liquid in the exchanger 14, the latter has an inlet opening 21 for the liquid to be cooled disposed at a lower region of the holding casing 16. Finally, the suction unit 1 comprises an integrated support structure 22 made up of a side portion defined by said tank 7 of parallelepiped shape and a base portion 23 integral with a lower band of the tank and adapted to support pump 2 at the upper part thereof. The base portion 23, of parallelepiped shape as well, practically forms a box disposed alongside tank 7, of smaller height than said tank and adapted to substantially align the middle axis of pump 2 with the overflow level defined by the discharge pipe 10 of tank 7.

The invention achieves important advantages.

First of all, insertion of the heat exchanger into the separation tank enables bulkiness of the suction unit as a whole to be reduced, making said unit particularly compact. In particular, it is pointed out that the squared shape of the separation tank and its integration with the base portion of the support structure enables a unit of regular outer shape to be obtained which can be contained within an overall volume substantially in the form of a parallelepiped and therefore of easy transportation and storage.

It is also to be noted that, being the heat exchanger of the separation tank removable, an easy servicing of both these components is allowed because, when the former is disengaged from the latter, the latter is already open and therefore can be immediately inspected without further access openings being required.

It should be also recognized that dipping of the heat exchanger into the liquid to be cooled contained in the separation tank, in addition to enabling the amount of liquid to be admitted thereinto to be reduced, the level of the free surface and therefore of the achieved hydrostatic pressure being the same, it is also advantageous because, making a comparison with the known art, the holding casing of the heat exchanger constitutes an additional heat-exchange surface for the liquid surrounding it and present in the tank. Practically, the liquid which is collected in said tank, before entering the exchanger, is already submitted to partial cooling due to contact with said holding casing of the exchanger into which flowing of at least partly cooled liquid takes place. As a result, a better yield of the exchanger is achieved and consequently it is for example possible either to increase the flow rate of the liquid circulating in the unit, or to reduce the inlet temperature and the cooling liquid flow rate, or even to reduce the overall dimensions of the exchanger.

## Claims

1. A fluid suction unit, comprising:
- a vacuum pump (2) with liquid circulation,
- a separation tank (7) having an inlet opening (6) for the fluid sent from the pump (7) and adapted to separate the liquid phase from the gaseous phase of said liquid, and
- a heat exchanger (14) adapted to cool said liquid phase before admission to said pump (2),
characterized in that said heat exchanger (14) is disposed at least partly at the inside of said separation tank (7).

2. A unit as claimed in claim 1, characterized in that said heat exchanger (14) comprises a holding casing (16) into which the liquid phase to be cooled flows.

3. A unit as claimed in claim 2, characterized in that said holding casing (16) of the heat exchanger (14) is removably connected to said separation tank (7).

4. A unit as claimed in claim 3, characterized in that said holding casing (16) of the heat exchanger (14) is insertable into the separation tank (7) through an access opening (7b) of same and has a flange (17) for attachment to the tank (7) which is adapted to sealingly close said access opening (7b).

5. A unit as claimed in claim 4, characterized in that said holding casing (16) of the heat exchanger (14) has a head (16a) projecting externally of said attachment flange (17) and from said tank (7) and provided with at least inlet and outlet orifices (18, 19) for the cooling fluid and one outlet (20) for connection with a duct (15) to convey the cooled liquid to said pump (2).

6. A unit as claimed in claim 5, characterized in that said attachment flange (17) is disposed close to said head (16a) so that the holding casing (16) mainly extends within said separation tank (7).

7. A unit as claimed in anyone of the preceding claims, characterized in that it comprises an integrated support structure (22) made up of a liquid-tight side portion defining said separation tank (7) and a base portion (23) integral with a lower band of said side portion and adapted to support said pump (2) at the upper part thereof, said base portion (23) having a size in height adapted to substantially align the upper profile of said pump (2) with the upper edge of the tank (7).

8. A unit as claimed in claim 1, characterized in that said separation tank (7) substantially has a parallelepiped shape.

9. A unit as claimed in claim 1, characterized in that said separation tank (7) is provided with partitions (8) for separation of the liquid phase from the gaseous phase, disposed internally and at the upper part thereof.

10. A unit as claimed in claim 2, characterized in that said holding casing (16) of the heat exchanger (14) has an inlet opening (21) for the liquid to be cooled disposed in a lower region of the casing itself.

11. A unit as claimed in anyone of the preceding claims, characterized in that the heat exchanger (14) is dipped into the liquid to be cooled contained in the tank (7).
